# EUROPEAN PATENT APPLICATION

(11) **EP 4 414 085 A1**
(43) Date of publication of application: **14.08.2024**
(21) Application number: 23156025.1
(22) Date of filing: 10.02.2023
(51) Int. Cl.: B04B 9/08, F16B 21/16, F16D 1/116, F16D 43/16

(54) **ROTOR, ROTOR ATTACHMENT MECHANISM, CENTRIFUGE AND CORRESPONDING METHODS**

(71) Applicant: Thermo Electron LED GmbH, 37520 Osterode (DE)
(72) Inventor: NAUMANN, Johann, 37520 Osterode (DE)
(74) Representative: Boult Wade Tennant LLP

(57) **Abstract**

A rotor for a centrifuge is provided. The rotor comprises: one or more sample cavities for receiving samples; and an engagement pin. The engagement pin comprises a head at a distal end of the engagement pin. The head has in order from the distal end in a first direction: a first taper towards the distal end; and a second taper towards a proximal end of the engagement pin.

## Description

### Background

The present specification relates to various examples of a rotor for a centrifuge, a rotor engagement mechanism for engaging a rotor with a motor shaft of a centrifuge, a centrifuge, and methods for attaching and detaching a rotor to and from a centrifuge. In general, the specification relates to an auto-locking system for attaching a rotor to a centrifuge, and the various elements of this system as well as corresponding methods for the use of this mechanism. Reference to a locking system encompasses one or more of: a rotor; a rotor body; a rotor adaptor; a rotor attachment mechanism; and a centrifuge, as well as any other components involved in axially retaining a rotor.

In use, it is common to remove and attach rotors to centrifuges. This may be to change the size of sample containers that can be received in the rotor, to switch in and out pre-filled rotors, or for any other purpose. Centrifuges may be categorised based on their size and the size of sample containers they are intended to receive. For example, *"microliter"* centrifuges may be sized and arranged to process microlitre tubes, for examples tubes of 0.2ml to 2.0 ml. While a *"general purpose"* centrifuge may be used for larger tube sizes, such as 5 ml, 10 ml, 15 ml, and up to 250 ml or 500 ml. Centrifuges may additionally, or alternatively, be categorised based on their optimized operational speed. For example, an *"ultracentrifuge"* may be provided for generating rotation as fast as 150,000 rpm.

Known locking mechanisms require a user to interact with the mechanism in order to attach and/or detach the rotor. For example, microliter rotors may typically be locked by a nut to a motor shaft of the centrifuge. General purpose rotors may also be locked by a nut to a motor shaft of the centrifuge, or by another connection mechanism. However, these other connection mechanisms typically require the user to interact with the mechanism such as by pushing a button before they can attach and/or detach the rotor from the centrifuge.

WO 2012/059151 A1 discloses a rotor with a locking system formed of locking levers which engage a shaped drive shaft to axially secure the rotor. The locking levers are biased towards a position where they do not engage the shaped drive shaft to allow attachment and detachment of the rotor from the shaped drive shaft. Rotation of the rotor causes centrifugal force to drive the locking levers to a position where they engage the shaped drive shaft. This means that there is nothing holding the rotor axially when it is spinning at low speeds or stationary. As a result, the rotor may inadvertently not be seated correctly on the shaped drive shaft.

US 8 678 987 B2 discloses a locking system for general-purpose rotors. Coupling elements are provided which are biased by pressure springs towards a position in which they axially retain the rotor. In order to disengage these coupling elements so as to attach or detach the rotor, an actuating element needs to be inserted along a central axis. This is a time-consuming method for attaching or detaching the rotor.

US 9 782 783 B2 discloses a further locking system for a rotor. This includes rollers which move radially outward during rotation of the rotor. A guideway directs these rollers to move in an axial direction when they move radially outward. This axial movement then drives coupling elements into a position where they axially retain the rotor. Again, this axial lock is only provided when the rotor is spinning with sufficient angular velocity, and not when the rotor is stationary or spinning at low speeds.

DE 699 10 220 T2 discloses a further locking system for a rotor. A locking sub-assembly is mounted around a neck portion. This locking sub-assembly expands radially under rotation to engagement between the rotor and the neck portion, to thereby prevent axial movement. As with the above disclosures, this axial restraint is only provided when the rotor is spinning with sufficient angular velocity, and not when the rotor is stationary or spinning at low speeds.

Eppendorf Himac Technologies Co., Ltd. also have a locking system for their ultracentrifuges. This also only provides axial restraint when the rotor is spinning with sufficient angular velocity, and not when the rotor is stationary or spinning at low speeds. Further, the restraining force provided is relatively low and hence the rotor must be rotated in a vacuum in order to reduce the lift force generated.

There is therefore a need for an improved auto-locking mechanism for a rotor of a centrifuge.

### Summary

A rotor for a centrifuge is provided according to claim 1. Such a rotor can be quickly attached to and removed from a centrifuge, while being axially retained.

The rotor may comprise a rotor body comprising the one or more sample cavities, and a rotor adaptor comprising the engagement pin the rotor adaptor may be releasably attached to the rotor body. One rotor adaptor can be used for different rotor bodies. The different rotor bodies can vary, for example in cavity size and/or number. In this sense the rotor adaptor means that various rotors can be used with the centrifuge. The rotor adaptor may be an integral/unitary component to the rest of the rotor body, or a separate component. Integral/unitary rotor adaptors may be particularly useful for metal rotor bodies, while separate rotor adaptors may be more useful for plastic rotor bodies. However, each type of rotor body is not necessarily limited to such a rotor adaptor.

The engagement pin may be arranged in a centre of the rotor. This means that the rotor can spin about this central engagement pin.

The engagement pin may further comprise, in order from the second taper in the first direction: a receiving portion; and a base portion, wherein the receiving portion is narrower than the base portion and the head. The base portion can be used to help axially locate the rotor.

The base portion may comprise a taper towards the distal end of the engagement pin. The taper can guide the rotor to a particular axial position.

The first taper may be shallower than the second taper. This can mean that a lower force is required to attach the rotor (to overcome the shallower taper) than to detach the rotor to overcome the steeper taper). The shallower taper also helps prevent stick-slip, rattle or jamming effects. The steeper taper helps to distribute locking force through the pivotable arm(s) during operation of the centrifuge.

The engagement pin may be rotationally symmetric. This can allow the rotor to be attached without having to worry about rotational alignment of the engagement pin and receiving cavity.

The engagement pin may be circular in cross-section. A circular engagement pin can allow for easy attachment of the rotor.

The engagement pin may be polygonal in cross-section, preferably for transmitting torque from a motor shaft of a centrifuge to the rotor. Such a polygonal engagement pin, which does not need to be strictly polygonal as discussed below, can facilitate torque transfer between the motor shaft and the rotor.

A rotor attachment mechanism is provided according to claim 8. This rotor attachment mechanism allows for a motor shaft to engage with the rotor discussed above.

The rotor attachment mechanism may further comprise a plurality of pivotable arms, each biased to extend into the receiving cavity for engaging the engagement pin in the receiving cavity to axially retain the rotor. A plurality of pivotable arms can result in a more secure axial retention of the rotor.

The plurality of pivotable arms may be arranged with rotational symmetry around the receiving cavity. Rotational symmetry of the pivotable arms effectively balances forces applied to the engagement pin, which can help to centre the rotor.

Each pivotable arm may comprise: a first end biased into the receiving cavity for engaging the engagement pin in the receiving cavity to axially retain the rotor; a second end opposite the first end; and a pivot point between the first end and the second end, wherein each pivotable arm is pivotally attached to the rotor attachment mechanism at the pivot point, and a centre of mass of each pivotable arm is between the pivot point and the second end. This arrangement means that as the rotor attachment mechanism rotates, centrifugal force will drive the second ends outwards and hence the first ends inwards, to grip the engagement pin. As a result, a stronger axial retention force is provided when the centrifuge is in operation.

Each pivotable arm may comprise a counterweight portion at or near to the second end. The counterweight acts to increase the mass of the pivotable arm at or near to the second end - that is, between the pivot point and the second end. This additional mass is then acted on by the centrifugal force and thereby further increases the axial retention force when the centrifuge is in operation. Such a counterweight also means that the centre of mass of the pivotable arm is radially outward of the centre. This thereby increases the effective diameter of the force application of the pivot arms and hence increases the axial retention force.

Each pivotable arm may comprise a recess for receiving a portion of the engagement pin, preferably each recess is a depression for receiving an apex between a first taper and a second taper of the engagement pin. This shaped recess can improve the grip of the arms on the engagement pin in the engaged position.

The rotor attachment mechanism may further comprise a torque transfer mechanism for transferring rotation of the motor shaft to a rotor in the engaged position. This means that a separate transfer is not required to cause rotation of the rotor.

The torque transfer mechanism may comprise one or more protrusions for engaging corresponding cavities on the rotor, or vice-versa. That is, the protrusions may be on the torque transfer mechanism, or the protrusions may be on the rotor. In certain examples, both the torque transfer mechanism and the rotor comprise a cavity, with a torque transfer pin inserted across these cavities. This is an effective way to transfer torque to the rotor.

A centrifuge is provided according to claim 13. This centrifuge allows for quick attachment and removal of the rotor from the centrifuge.

A method of attaching a rotor to a centrifuge is provided according to claim 14. This is a quick and simple method to attach a rotor to a centrifuge.

A method of detaching a rotor from a centrifuge is provided according to claim 15. This is a quick and simple method to detach a rotor to a centrifuge.

A further rotor for a centrifuge is also provided. This may, for example, be an alternative arrangement to the rotor discussed above. The rotor comprises: one or more sample cavities for receiving samples; a receiving cavity for receiving a motor shaft of a centrifuge in an engaged position; and a pivotable arm biased into the receiving cavity for engaging the motor shaft in the receiving cavity to axially retain the rotor in the engaged position. Such a rotor can be quickly attached to and removed from a centrifuge, while being axially retained.

The rotor may further comprise a plurality of pivotable arms, each biased to extend into the receiving cavity for engaging the motor shaft in the receiving cavity to axially retain the rotor. A plurality of pivotable arms can result in a more secure axial retention of the rotor.

The plurality of pivotable arms may be arranged with rotational symmetry around the receiving cavity. Rotational symmetry of the pivotable arms effectively balances forces applied to the motor shaft, which can help to centre the rotor.

Each pivotable arm may comprise: a first end biased into the receiving cavity for engaging the motor shaft in the receiving cavity to axially retain the rotor; a second end opposite the first end; and a pivot point between the first end and the second end, wherein each pivotable arm is pivotally attached to the rotor at the pivot point, and a centre of mass of each pivotable arm is between the pivot point and the second end. This arrangement means that as the rotor rotates, centrifugal force will drive the second ends outwards and hence the first ends inwards, to grip the motor shaft. As a result, a stronger axial retention force is provided when the centrifuge is in operation.

Each pivotable arm may be pivotable around an axis of rotation perpendicular to an axis of rotation of the rotor. This may provide for an easy engagement and disengagement of the rotor and the rotor attachment mechanism.

Each pivotable arm may comprise a counterweight portion at or near to the second end. The counterweight acts to increase the mass of the pivotable arm at or near to the second end - that is, between the pivot point and the second end. This additional mass is then acted on by the centrifugal force and thereby further increases the axial retention force when the centrifuge is in operation.

Each pivotable arm may comprise a recess for receiving a portion of the motor shaft, preferably each recess is a depression for receiving an apex between a first taper and a second taper of the motor shaft. This shaped recess can improve the grip of the arms on the motor shaft in the engaged position.

The rotor may further comprise a torque transfer mechanism for transferring rotation of the motor shaft to a rotor in the engaged position. This means that a separate transfer is not required to cause rotation of the rotor.

The rotor may comprise one or more protrusions for engaging corresponding cavities on the motor shaft, or vice-versa. That is, the protrusions may be on the rotor, or the protrusions may be on the motor shaft. In certain examples, both the rotor and the motor shaft comprise a cavity, with a torque transfer pin inserted across these cavities. This is an effective way to transfer torque to the rotor.

The rotor may comprise a rotor body comprising the one or more sample cavities, and a rotor adaptor comprising the receiving cavity and each pivotable arm, the rotor adaptor may be releasably attached to the rotor body. One rotor adaptor can be used for different rotor bodies. The different rotor bodies can vary, for example in cavity size and/or number. In this sense the rotor adaptor means that various rotors can be used with the centrifuge. The rotor adaptor may be an integral/unitary component to the rest of the rotor body, or a separate component. Integral/unitary rotor adaptors may be particularly useful for metal rotor bodies, while separate rotor adaptors may be more useful for plastic rotor bodies. However, each type of rotor body is not necessarily limited to such a rotor adaptor.

The receiving cavity may be arranged in a centre of the rotor. This means that the rotor can spin about this central receiving cavity.

A centrifuge is provided. The centrifuge comprising: a motor shaft for transmitting rotational movement to a rotor, wherein the motor shaft comprises a head at a distal end of the motor shaft, the head having in order from the distal end in a first direction: a first taper towards the distal end; and a second taper towards a proximal end of the motor shaft. This centrifuge allows for quick attachment and removal of the rotor from the centrifuge.

The motor shaft may further comprise, in order from the second taper in the first direction: a receiving portion; and a base portion, wherein the receiving portion is narrower than the base portion and the head. The base portion can be used to help axially locate the rotor.

The base portion may comprise a taper towards the distal end of the motor shaft.

The first taper may be shallower than the second taper. This can mean that a lower force is required to attach the rotor (to overcome the shallower taper) than to detach the rotor 9to overcome the steeper taper).

The motor shaft may be rotationally symmetric. This can allow the rotor to be attached without having to worry about rotational alignment of the motor shaft and receiving cavity.

The motor shaft may be circular in cross-section. A circular engagement pin can allow for easy attachment of the rotor.

The motor shaft may be polygonal in cross-section, preferably for transmitting torque from the motor shaft to a rotor. Such a polygonal engagement pin, which does not need to be strictly polygonal as discussed below, can facilitate torque transfer between the motor shaft and the rotor.

A centrifuge is provided, including of the features discussed herein and a rotor as discussed herein. This centrifuge allows for quick attachment and removal of the rotor from the centrifuge.

A method of attaching a rotor to a centrifuge is provided, the method comprises the steps of providing a centrifuge as discussed herein; providing a rotor as discussed herein; inserting the motor shaft into the receiving cavity such that each pivotable arm engages the motor shaft to axially retain the rotor. This is a quick and simple method to attach a rotor to a centrifuge.

A method of detaching a rotor from a centrifuge is provided. The rotor and/or centrifuge may be as discussed herein. The motor shaft is received in the engagement cavity such that each pivotable arm is engaging the motor shaft to axially retain the rotor. The method comprises the steps of lifting the rotor axially such that the second taper engages and moves each pivotable arm against its bias. This is a quick and simple method to detach a rotor to a centrifuge.

### Brief Description of the Drawings

The present specification makes reference to the accompanying drawings, by way of example only, in which:
Figure 1 shows a cross-sectional perspective view of a part of a rotor, a rotor attachment mechanism and a motor shaft of a centrifuge
Figure 2 shows an exploded perspective view of part of the rotor, the rotor attachment mechanism and the motor shaft of Figure 1;
Figure 3 shows a cross-sectional side view of the rotor adaptor of Figure 1;
Figure 4 shows a cross-sectional perspective view of a further rotor and a further motor shaft of a centrifuge; and
Figure 5 shows an exploded perspective view of part of the rotor and the motor shaft of Figure 4.

### Detailed Description

The present specification describes two primary examples of locking systems for rotors. Unless otherwise expressly stated any disclosure in relation to one of these examples is equally applicable to the other example, with any appropriate modifications being made.

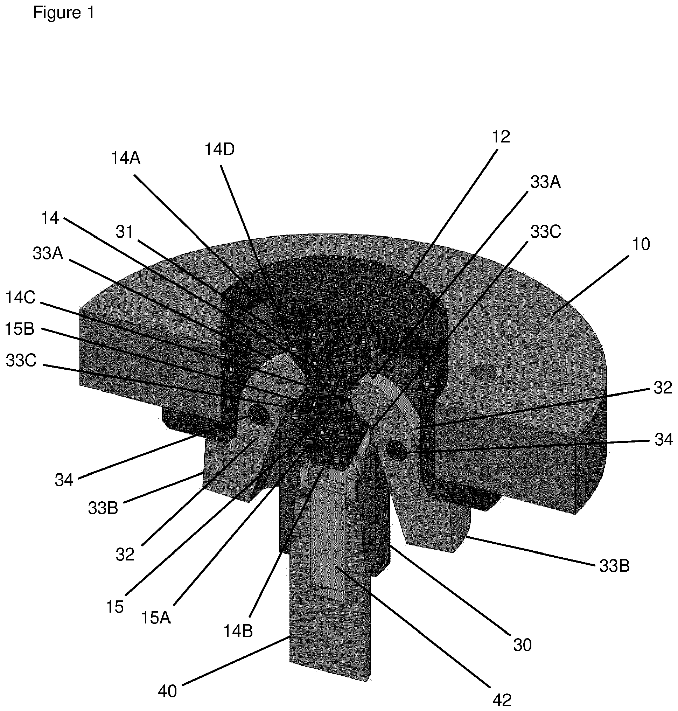

Figures 1 to 3 show a first example of elements of a locking system for a rotor in a centrifuge. A rotor 10 and rotor adaptor 12are shown.

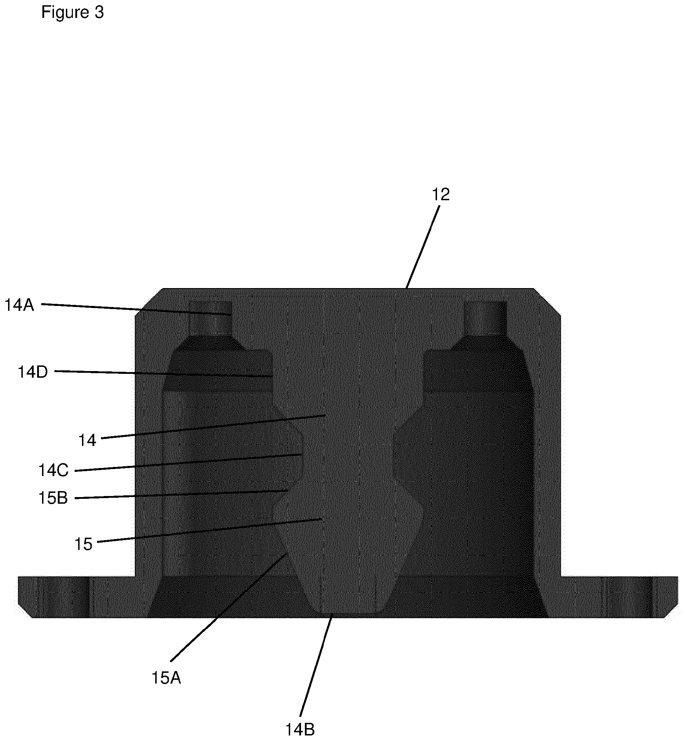

This rotor adaptor 12 is attachable to a rotor body of the rotor 10 for a centrifuge. In certain examples, the rotor adaptor 12 may be permanently attached to the rotor body. Alternatively, the rotor adaptor 12 may be removably attached to the rotor body - that is, the rotor adaptor 12 may be attached and detached non-destructively from the rotor body. In further examples, the rotor adaptor 12 may be integral and/or unitary with the rotor body. The rotor adaptor 12 is shown in isolated side cross-section in Figure 3, where details of the rotor adaptor 12 can be easily seen.

As the rotor adaptor 12 is an element of the rotor 10, all features of the rotor adaptor 12 may be described as being features of the rotor 10. Likewise, any description of features of the rotor adaptor 12 are equally features of the rotor 10.

The rotor 10 further includes one or more sample cavities for receiving samples. The one or more sample cavities may be in the rotor body. The samples may be sample tubes. The samples may be any suitable samples for processing in a centrifuge. The centrifuge may be a microliter centrifuge which processes corresponding microliter samples. Alternatively, the centrifuge may be a general purpose centrifuge or an ultracentrifuge. The sample cavities of the rotor 10 may be sized and shaped to correspond to the samples or sample tubes that the rotor 10 is to be used with.

The rotor 10 comprises an engagement pin 14. This engagement pin 14 may be in the rotor adaptor 12. The engagement pin 14 extends axially away from the rotor 10 in an axial direction. This engagement pin 14 has a proximal end 14A immediately adjacent and/or extending from the rotor 10. The engagement pin 14 also has a distal end 14B away from the rotor 10. The engagement pin 14 may generally be formed as a shaft.

The engagement pin 14 may be circular in cross-section. However, the engagement pin 14 may also comprise one or more straight portions in cross-section. For example, the engagement pin 14 may be generally polygonal in cross-section - such as hexagonal. This is not limited to strictly polygonal in that there are no curved edges. Instead, there may be one or more straight edges and/or corners between edges of the engagement pin 14 in cross section. This polygonal arrangement may allow for torque to be transferred to the rotor 10 via the engagement pin 14. The cross-sectional shape does not have to be the same along the entire length of the engagement pin 14. For example, one or both of the proximal end 14A or distal end 14B may have a different cross-sectional shape to other portions of the engagement pin 14. The engagement pin 14 may be rotationally symmetric, for example about the axial direction.

At the distal end 14B of the engagement pin 14 is a head 15. The head 15 may be the distal-most element of the engagement pin 14. The head 15 comprises, nearest the distal end 14B of the engagement pin 14, a first taper 15A towards the distal end 14B. That is, an outer diameter of the engagement pin 14 decreases in a direction from the proximal end 14A to the distal end 14B for the first taper 15A. The head 15 further comprises a second taper 15B towards the proximal end 14A of the engagement pin 14. That is, the outer diameter of the engagement pin 14 decreases in a direction from the distal end 14B to the proximal end 14A for the second taper 15B. In order from the distal end 14B of the engagement pin 14, the head 15 first comprises the first taper 15A followed by the second taper 15B. As a result of this head 15, first taper 15A and second taper 15B the engagement pin 14 may generally be referred to as a shaped pin.

In other words, the head 15, starting from the distal end 14B of the engagement pin 14 and moving towards the proximal end 14A of the engagement pin 14 initially increases in outer diameter for the first taper 15A, then decreases in outer diameter for the second taper 15B. There may be an apex, or corner, defined between the first taper 15A and the second taper 15B. This apex may be a part of the head 15 with the largest outer diameter.

The first taper 15A may be longer in the axial direction than the second taper 15B. The first taper 15A may be shallower than the second taper 15B. That is, the first taper 15A may have a shallower (or lower) taper angle than the second taper 15B. For example, the first taper 15A may have a taper angle of between 20° and 30°, such as 24°. The second taper 15B may have a taper angle of between 40° and 50°, such as 45°. Figure 3 shows the rotor adaptor in isolated side cross-section. The various tapers can be easily seen in this Figure.

The engagement pin 14 may be arranged in a centre of the rotor 10. For example, the rotor 10 may be generally circular with the engagement pin 14 in its centre. The rotor adaptor 12 may be arranged in the centre of the rotor 10, with the engagement pin 14 in a centre of the rotor adaptor 12.

In use, this engagement pin 14 is gripped by the arms 32 in order to retain the rotor 10 in the axial direction to the centrifuge.

The engagement pin 14 may further comprise a base portion 14D at the proximal end 14A of the engagement pin 14. A receiving portion 14C may be provided between the base portion 14D and the head 15. The receiving portion 14C may have a smaller diameter than one or both of the head 15 and/or the base portion 14D. The base portion 14D may comprise a taper towards the distal end 14B of the engagement pin 14 to the receiving portion 14C. This taper of the base portion 14D may have a same taper angle, or a different taper angle, as the first taper 15A and/or the second taper 15B. Effectively, the receiving portion 14C may form a trough in the engagement pin 14.

In other words, from the second taper 15B in the direction of the distal end 14A of the engagement pin 14, the engagement pin 14 may further comprise the receiving portion 14C and then the base portion 14D.

A rotor attachment mechanism 30 is also provided. The rotor attachment mechanism 30 essentially acts as a conduit between the rotor 10 and a motor shaft 40 of the centrifuge. The rotor attachment mechanism 30 may be separate from the motor shaft 40 as shown in Figures 1 to 3. In such examples the rotor attachment mechanism 30 may be fixed to the motor shaft 40, such as by cylinder screw 42. In alternatives, the rotor attachment mechanism 30 may be integral and/or unitary with the motor shaft 40.

The rotor attachment mechanism 30 comprises a receiving cavity 31. The receiving cavity 31 receives, in use the engagement pin 14 of the rotor 10. When the engagement pin 14 is fully inserted into the receiving cavity 31, this is said to be an engaged position. The receiving cavity 31 may be arranged generally centrally in the rotor attachment mechanism 30.

One or more pivotable arms 32 are provided with the rotor attachment mechanism 30. While Figures 1 to 3 show two arms 32, there may be any number of arms 32. These arms 32 are identified as pivotable as they are pivotally mounted to a body of the rotor attachment mechanism 30. Each pivotable arm 32 may pivot about an axis of rotation. This axis may be any suitable axis. In specific examples, the axis of rotation of each pivotable arm 32 may be perpendicular to an axis of rotation of the rotor. The axes of rotation do not need to intersect and indeed typically do not intersect.

Each arm 32 may be biased such that it extends into the receiving cavity 31. For example, Figures 1 to 3 show how the receiving cavity 31 extends in the axial direction, with one or more radial bores meeting this axial receiving cavity 31. The arms 32 may each extend through such a radial cavity into the receiving cavity 31. Each arm 32 is biased to extend into the receiving cavity 31 in order to engage the engagement pin 31 of the rotor 10 and thereby retain the rotor 10 in the axial direction. For example, each arm 32 may grip the engagement pin 14 of the rotor 10. The bias may be provided, for example, by one or more biasing members 36 which act on the arms 32. That is, the arms 32 may be biased to extend into the receiving cavity 31 by one or more biasing members 36. Each arm 32 may have a corresponding biasing member 36 contacting it. In further examples, the arms 32 may not be biased in this direction, and may in fact be biased opposite this direction. Each biasing member 36 may be a spring.

In certain examples, each arm 32 may comprise a pivot point 35. Each arm 32 may be pivotally attached to the body of the rotor attachment mechanism 30 at this pivot point 35, for example such that the arm 32 pivots about this pivot point 35. An example pivot point 35 is the bore 35 shown in Figures 1 to 3. This bore 35 receives a pivot pin 34 which may be retained in the body of the rotor attachment mechanism 30. Each arm 32 may comprise a first end 33A and a second end 33B, the second end 33B opposite the first end 33A. The pivot point 35 may be between the first end 33A and the second end 33B.

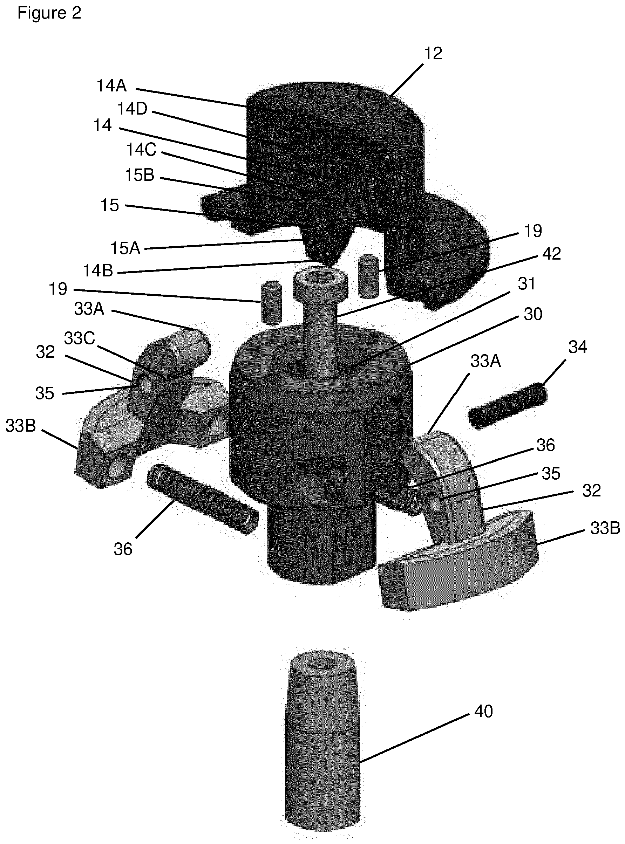

It may be the first end 33A of the arm 32 that extends into the receiving cavity 31 to engage the engagement pin 14. For each pivot arm 32, a centre of mass of the pivot arm 32 may be located between the pivot point 35 and the second end 33B. This may be achieved by having a counterweight portion at or near to the second end 33B. For example, the counterweight portion may be physically larger (as shown in Figure 2). Alternatively, or additionally, the counterweight portion may be formed of a denser material than the first end 33A. Of course, the pivot point 35 does not have to be arranged at a middle of the arm 32 and so even for a uniform arm 32 the centre of mass may be between the pivot point 35 and the second end 33B.

In examples with a plurality of arms 32, these may be arranged with rotational symmetry about the axial direction - that is about the receiving cavity 31 since this extends in the axial direction. That is, for an arrangement with N arms 32, they may be spaced (when viewed from above) by (360/N)°. In Figures 1 and 2, there are two arms 32, and so they are spaced by 180°.

In certain examples, each arm 32 may comprise a recess 33C. This recess 33C may be shaped so as to receive a portion of the engagement pin 14. For example, this may be an apex between the first taper 15A and the second taper 15B of the engagement pin 14. The recess 33C may be shaped to correspond to these features of the engagement pin 14. In the engaged position, each arm 32 may be axially aligned with the receiving portion 14C of the engagement pin 14.

The rotor attachment mechanism 30 may further comprise a torque transfer mechanism for transferring rotation of the motor shaft 40 to the rotor 10. For example and as discussed above, this may be directly via the engagement pin 14, particularly when the engagement pin 14 is not purely circular in cross-section. In an example the engagement pin 14 may be polygonal in cross-section and there may be one or more corresponding surfaces in the rotor attachment mechanism 30 which engage one or more faces of the polygonal engagement pin 14. Thus, when the rotor attachment mechanism 30 rotates with the motor shaft 40, the rotor 10 is driven via this engagement. In certain examples the rotor attachment mechanism 30 may have a corresponding polygonal recess to receive the polygonal cross-section of the engagement pin 14.

Alternatively, or additionally, the torque transfer may be via one or more protrusions from the rotor attachment mechanism 30 which are received in corresponding cavities on the rotor 10. The one or more protrusions may, alternatively, be on the rotor 10 and be received in one or more cavities on the rotor attachment mechanism 30. In Figure 2, torque pins 19 are provided which act as the protrusions and hence allow torque to be transferred from the motor shaft 40, to the rotor attachment mechanism 30 and then on to the rotor 10 to thereby rotate the rotor 10.

A centrifuge is also provided, the centrifuge includes the motor shaft 40. The rotor 10 described above and the rotor attachment mechanism 30 are also provided. Collectively, this can form a kit.

In use, the rotor attachment mechanism 30 is fixed to the motor shaft 40, such as via cylinder screw 42. This means that when the motor shaft 40 rotates, the rotor attachment mechanism 30 also rotates. Any other attachment that allows for the rotor attachment mechanism 30 to rotate with the motor shaft 40 is also considered. For example, there may be a frictional engagement and/or engaging surfaces to drive rotation of the rotor attachment mechanism 30. The motor shaft 40 may have a conical distal end, which engages with a corresponding conical surface of the rotor attachment mechanism 30. Tight contact of the motor shaft 40 and rotor attachment mechanism 30 can therefore mean that rotation of the motor shaft is transmitted to the rotor attachment mechanism 30 through this conical contact, and hence on to the rotor 10.

With the rotor 10 unattached, the arms 32 extend into the receiving cavity 31. A space between the arms 32 in this central cavity may be less than a diameter of the engagement pin 14. Particularly, less than a diameter of the head 15 of the engagement pin 14, specifically the apex of the head 15. The arms 32 are biased to this position inside the receiving cavity 31.

The rotor 10 is then introduced. The rotor 10 is attached to the centrifuge by inserting the engagement pin 14 into the receiving cavity 31. For example, the rotor 10 may be held axially above the motor shaft 40 and rotor attachment mechanism 30 to align the engagement pin 14 with the receiving cavity 31. The rotor 10 is then lowered in the axial direction. As the engagement pin 14 enters the receiving cavity 31, it will engage the first ends 33A of the arms 32. As the engagement pin 14 engages the arms 32, it will force them outward of the receiving cavity 31 against the bias of arms.

Particularly, the first ends 33A of the arms 32 will contact at first the first taper 15A. The direction of this first taper 15A is such that it will progressively push the arms 32 against their bias. In this sense, the arms 32 will initially resist insertion of the engagement pin 14 into the receiving cavity 31.

As the engagement pin 14 continues to be inserted into the receiving cavity 31, the first ends 33A of the arms 32 will contact the second taper 15B. This second taper 15B is in an opposite direction to the first taper 15B. As a result, further insertion of the engagement pin 14 into the receiving cavity 31 will allow the arms to move inwardly of the receiving cavity 31 under their bias. This will mean that the arms 32 act to pull the engagement pin 14 into the receiving cavity 31.

The receiving pin 14 will then be fully received in the cavity and the rotor 10 will be in the engaged position. In this position, the first ends 33A of the arms 33 may be axially aligned with the receiving portion 14C. In examples with a further taper of the base portion 14D, the bias of the arms 32 may act to keep the engagement pin 14 in this position.

In this sense, the rotor 10 may be axially retained when it is in the engaged position. Axial movement of the rotor 10 would force the first ends 33A of the arms 32 outward of the receiving cavity 31 against the bias of the arms 32 and is hence resisted.

In general, a method of attaching a rotor 10 to a centrifuge may be identified. This method comprises the steps of providing a centrifuge comprising a motor shaft 40 and the rotor attachment mechanism 30 as described above. The motor shaft 40 and rotor attachment mechanism 30 may be separate, attached components or may be unitary. A rotor 10 as described above is then provided. The engagement pin 14 of the rotor 10 is then inserted into the receiving cavity 31 of the rotor attachment mechanism 30. This insertion is continued, for example in the manner as described above, such that each pivotable arm 32 engages the engagement pin 14 to axially retain the rotor 10.

With the rotor 10 attached to the centrifuge, operation of the centrifuge may be performed. One or more samples or sample tubes may be inserted in the sample cavities of the rotor 10. These are samples which are to be centrifuged.

The centrifuge is then operated. The motor shaft 40 rotates, causing rotation of the rotor attachment mechanism 30 and the rotor 10. As the rotor attachment mechanism 30 rotates, centrifugal force acts on the arms 32. With the arms 32 having their centre of mass between the pivot point 35 and the second end 33B, the second end 33B is forced outwardly of the rotor attachment mechanism 30 by this centrifugal force. This results in the first ends 33A being forced inwardly. This means that the arms 32 grip the engagement pin 14 with a greater force, thereby further axially retaining the rotor 10 in use.

As a result, the force applied to axially retain the rotor 10 increases when the centrifuge is used. This means that the rotor 10 will not detach in use.

The lower retaining force when the rotor 10 is stationary however means that the rotor 10 can be readily removed by a user by hand against the force of the arms 32. This means that the rotor 10 can be easily removed by hand without the need to use a special tool or releasing button or the like.

To remove the rotor 10, the rotor 10 is lifted such that the engagement pin 14 begins to move away from the rotor attachment mechanism 30. This causes the arms 32 to ride up the second taper 15B. Once the arms 32 have passed the second taper 15B and reached the first taper 15A then the biasing force acting on the arms 32 will force the engagement pin 14 from the receiving cavity 31.

In this sense, the rotor 10 can be securely retained in use while still allowing for easy removal. For example, microliter centrifuges may generate an axial force of 30 N to 40 N on the rotor 10 in an upward direction, which must be resisted by the arms 32 in use. The centrifugal force acting on the arms 32 means that this axial force on the rotor 10 can be resisted to axially retain the rotor 10. Once the centrifuge has stopped operating, it may be desired that the force required to lift the rotor 10 is less than this amount. This may be achieved by the present example.

In general, a method of detaching the rotor 10 from a centrifuge is provided. The rotor 10 is as described above. The centrifuge comprises the motor shaft 40 and the rotor attachment mechanism 30 discussed above. The engagement pin 14 is received in the receiving cavity 31 such that each pivotable arm 32 is engaging the engagement pin 14 to axially retain the rotor 10. The method comprises the step of lifting the rotor 10 axially such that the second taper 15B engages and moves each pivotable arm 32 against its bias. This lifting is continued until the engagement pin 14 is clear of the receiving cavity 31.

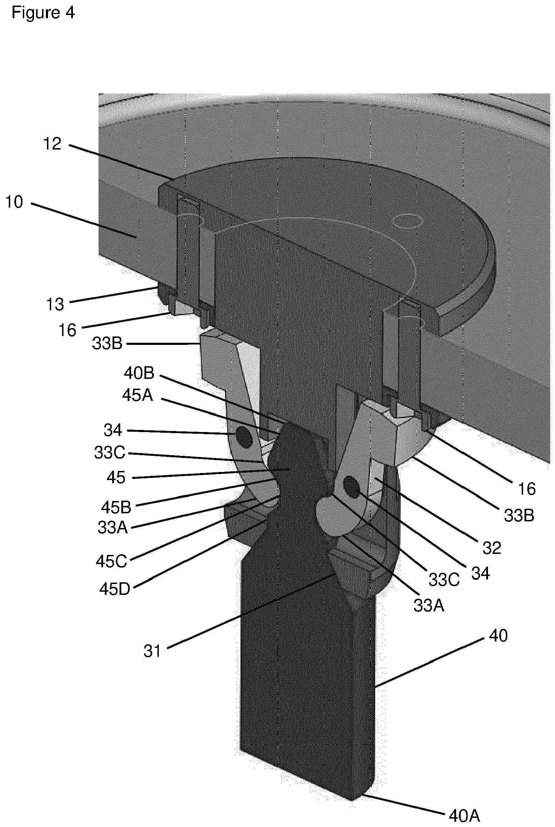

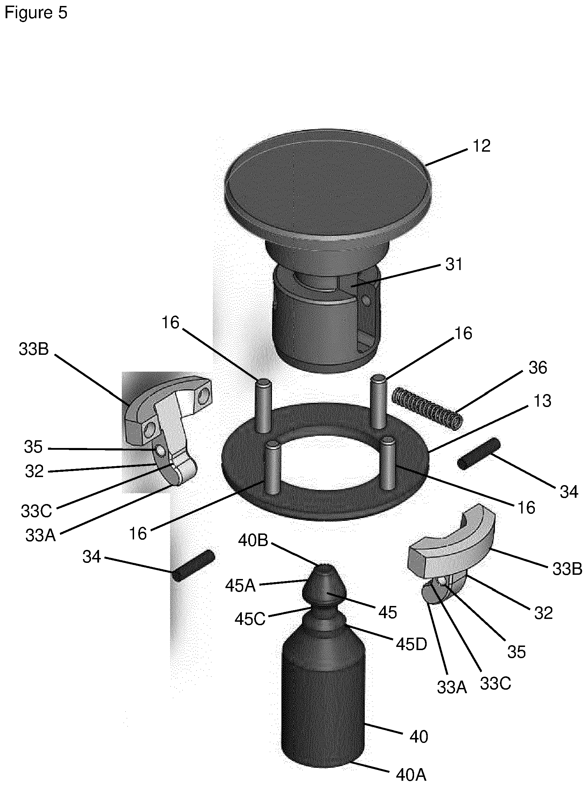

A further example of a locking system for a rotor in a centrifuge is shown in Figures 4 and 5. This example is generally similar to the example of Figures 1 to 3 and unless otherwise expressly indicated otherwise any disclosure in relation to the example of Figures 1 to 3 is equally applicable to the example of Figures 4 and 5.

The primary difference between the two examples is that in this second example, rather than the shaped pin being an engagement pin 14 on the rotor 10, it is instead the motor shaft 40. That is, the motor shaft 40 is itself (or has an attachment thereto) shaped in a manner similar to the engagement pin 14 described above in relation to the first embodiment. As a corresponding result, the rotor attachment mechanism 30 is not required. Instead, the function of the rotor attachment mechanism 30 can be provided by the rotor 10. Again, this may be either directly on the rotor 10 itself, or via a rotor adaptor 12 such as shown in Figures 4 and 5 attached to the rotor 10. The rotor adaptor 12 may be permanently, or removably, attached to a rotor body of the rotor 10, the rotor body including the one or more sample cavities. Alternatively, the rotor adaptor 12 may be integral and/or unitary with the rotor body of the rotor 10.

A rotor 10 is shown, the rotor 10 comprises one or more sample cavities for receiving samples. The one or more sample cavities may be in the rotor body. The samples may be sample tubes. The samples may be any suitable samples for processing in a centrifuge. The centrifuge may be a microliter centrifuge which processes corresponding microliter samples. Alternatively, the centrifuge may be a general purpose centrifuge or an ultracentrifuge. The sample cavities of the rotor 10 may be sized and shaped to correspond to the samples or sample tubes that the rotor 10 is to be used with.

As noted above, the rotor 10 may be a single integral and/or unitary component. Alternatively, the rotor 10 may be formed of a rotor body and a rotor adaptor 12 such as shown in Figures 4 and 5. The rotor adaptor 12 may be fixed to the rotor body in any suitable manner. For example, Figures 4 and 5 show an example where the rotor adaptor 12 is fixed to the rotor body by means of fasteners 16, such as screws, and a face plate 13. The rotor adaptor 12 comprises a flange which extends beyond its central body. The central body may pass through a bore in the rotor body of the rotor 10, with the flange extending beyond the bore to contact a face of the rotor body of the rotor 10. The face plate 13 is then provided on an opposite face of the rotor body of the rotor 10. The fasteners pass through the face plate 13, the rotor body of the rotor 10 and into the flange of the rotor adaptor 12. While the face plate 13 is shown in Figures 4 and 5, certain examples may exclude the face plate 13. Of course, other attachments are also possible.

The rotor 10 comprises a receiving cavity 31. The receiving cavity 31 may be formed in the rotor adaptor 12 as shown in Figures 4 and 5. The receiving cavity 31 is suitable for receiving a motor shaft 40 of a centrifuge. Figure 4 shows the receiving cavity 31 having received a motor shaft 40 in an engaged position.

The receiving cavity 31 may be arranged in a centre of the rotor 10. For example, the rotor 10 may be generally circular with the receiving cavity 31 in its centre. The rotor adaptor 12 may be arranged in the centre of the rotor 10, with the receiving cavity 31 in a centre of the rotor adaptor 12.

The rotor 10 comprises one or more pivotable arms 32. While Figures 4 and 5 show two arms 32, there may be any number of arms 32. These arms 32 are identified as pivotable as they are pivotally mounted to a portion of the rotor 10.

Each arm 32 may be biased such that it extends into the receiving cavity 31. For example, Figures 4 and 5 show how the receiving cavity 31 extends in the axial direction, with one or more radial bores meeting this axial receiving cavity 31. The arms 32 may each extend through such a radial cavity into the receiving cavity 31. Each arm 32 is biased to extend into the receiving cavity 31 in order to engage the motor shaft 40 of the centrifuge and thereby retain the rotor 10 in the axial direction. For example, each arm 32 may grip the motor shaft 40 of the centrifuge. The bias may be provided, for example, by one or more biasing members 36 such as springs 36 which act on the arms 32. Each arm 32 may have a corresponding spring 36 contacting it. In further examples, the arms 32 may not be biased in this direction, and may in fact be biased opposite this direction.

In certain examples, each arm 32 may comprise a pivot point 35. Each arm 32 may be pivotally attached to the portion of the rotor 10 at this pivot point 35, for example such that the arm 32 pivots about this pivot point 35. An example pivot point 35 is the bore 35 shown in Figure 5. This bore 35 receives a pivot pin 34 which may be retained in the portion of the rotor 10. Each arm 32 may comprise a first end 33A and a second end 33B, the second end 33B opposite the first end 33A. The pivot point 35 may be between the first end 33A and the second end 33B.

It may be the first end 33A of the arm 32 that extends into the receiving cavity 31 to engage the motor shaft 40. For each pivot arm 32, a centre of mass of the pivot arm 32 may be located between the pivot point 35 and the second end 33B. This may be achieved by having a counterweight portion at or near to the second end 33B. For example, the counterweight portion may be physically larger (as shown in Figure 5). Alternatively, or additionally, the counterweight portion may be formed of a denser material than the first end 33A. Of course, the pivot point 35 does not have to be arranged at a middle of the arm 32 and so even for a uniform arm 32 the centre of mass may be between the pivot point 35 and the second end 33B.

In examples with a plurality of arms 32, these may be arranged with rotational symmetry about the axial direction - that is about the receiving cavity 31 since this extends in the axial direction. That is, for an arrangement with N arms 32, they may be spaced (when viewed from above) by (360/N)°. In Figures 4 and 5, there are two arms 32, and so they are spaced by 180°.

For this example to operate, the motor pin 40 (or an attachment thereto) is a shaped pin in a similar manner to the engagement pin 14 discussed above.

The motor shaft 40 extends axially away from the centrifuge in an axial direction. This motor shaft 40 has a proximal end 40A immediately adjacent and/or extending from the centrifuge. The motor shaft 40 also has a distal end 40B away from the centrifuge.

The motor shaft 40 may be circular in cross-section. However, the motor shaft 40 may also comprise one or more straight portions in cross-section. For example, the motor shaft 40 may be generally polygonal in cross-section - such as hexagonal. This is not limited to strictly polygonal in that there are no curved edges. Instead, there may be one or more straight edges and/or corners between edges of the motor shaft 40 in cross section. This polygonal arrangement may allow for torque to be transferred to the rotor 10 via the motor shaft 40. The cross-sectional shape does not have to be the same along the entire length of the motor shaft 40. For example, one or both of the proximal end 40A or distal end 40B may have a different cross-sectional shape to other portions of the motor shaft 40. The motor shaft 40 may be rotationally symmetric, for example about the axial direction.

At the distal end 40B of the motor shaft 40 is a head 45. The head 45 may be the distal-most element of the motor shaft 40. The head 45 comprises, nearest the distal end 40B of the motor shaft 40, a first taper 45A towards the distal end 40B. That is, an outer diameter of the motor shaft 40 decreases in a direction from the proximal end 40A to the distal end 40B for the first taper 45A. The head 45 further comprises a second taper 45B towards the proximal end 40A of the motor shaft 40. That is, the outer diameter of the motor shaft 40 decreases in a direction from the distal end 40B to the proximal end 40A for the second taper 45B. In order from the distal end 40B of the motor shaft 40, the head 45 first comprises the first taper 45A followed by the second taper 45B. As a result of this head 45, first taper 45A and second taper 45B the motor shaft 40 may generally be referred to as a shaped pin.

In other words, the head 45, starting from the distal end 40B of the motor shaft 40 and moving towards the proximal end 40A of the motor shaft 40 initially increases in outer diameter for the first taper 45A, then decreases in outer diameter for the second taper 45B. There may be an apex, or corner, defined between the first taper 45A and the second taper 45B. This apex may be a part of the head 45 with the largest outer diameter.

The first taper 45A may be longer in the axial direction than the second taper 45B. The first taper 45A may be shallower than the second taper 45B. That is, the first taper 45A may have a shallower (or lower) taper angle than the second taper 45B. For example, the first taper 45A may have a taper angle of between 20° and 30°, such as 24°. The second taper 45B may have a taper angle of between 40° and 50°, such as 45°.

In certain examples, each arm 32 may comprise a recess 33C. This recess 33C may be shaped so as to receive a portion of the motor shaft 40. For example, this may be an apex between the first taper 45A and the second taper 45B of the motor shaft 40. The recess 33C may be shaped to correspond to these features of the motor shaft 40.

In use, this motor shaft 40 is gripped by the arms 32 in order to retain the rotor 10 in the axial direction to the centrifuge.

The motor shaft 40 may further comprise a base portion 40D at the proximal end 40A of the motor shaft 40. A receiving portion 40C may be provided between the base portion 40D and the head 45. The receiving portion 40C may have a smaller diameter than one or both of the head 45 and/or the base portion 40D. The base portion 40D may comprise a taper towards the distal end 40B of the motor shaft 40 to the receiving portion 40C. This taper of the base portion 40D may have a same taper angle, or a different taper angle, as the first taper 45A and/or the second taper 45D. Effectively, the receiving portion 40C may form a trough in the motor shaft 40. In the engaged position, each arm 32 may be axially aligned with the receiving portion 40C of the motor shaft 40.

In other words, from the second taper 45B in the direction of the distal end 40A of the motor shaft 40, the motor shaft 40 may further comprise the receiving portion 40C and then the base portion 40D.

A centrifuge is also provided, the centrifuge includes the motor shaft 40. The rotor 10 described above is also provided. Collectively, this can form a kit.

In use, the when the motor shaft 40 rotates, the rotor 10 also rotates. This may be via a torque transfer mechanism for transferring rotation of the motor shaft 40 to the rotor 10. This may be directly via engagement of the rotor 10 and the motor shaft 40, such as when the motor shaft 40 is not purely circular in cross-section as discussed above.

Alternatively, or additionally, the torque transfer may be via one or protrusions from the rotor 10 which are received in corresponding cavities on the motor shaft 40. The one or more protrusions may, alternatively, be on the motor shaft 40 and be received in one or more cavities on the rotor 10. For example, torque pins 19 (not shown for Figures 4 and 5) may be provided which act as the protrusions and hence allow torque to be transferred from the motor shaft 40 to the rotor 10 to thereby rotate the rotor 10.

With the rotor 10 unattached, the arms 32 extend into the receiving cavity 31. A space between the arms 32 in this central cavity may be less than a diameter of the motor shaft 40. Particularly, less than a diameter of the head 45 of the motor shaft 40, specifically the apex of the head 45. The arms 32 are biased to this position inside the receiving cavity 31.

The rotor 10 is then introduced. The rotor 10 is attached to the centrifuge by inserting the motor shaft 40 into the receiving cavity 31. For example, the rotor 10 may be held axially above the motor shaft 40 to align the motor shaft 40 and the receiving cavity 31. The rotor 10 is then lowered in the axial direction. As the motor shaft 40 enters the receiving cavity 31, it will engage the first ends 33A of the arms 32. As the motor shaft 40 engages the arms 32, it will force them outward of the receiving cavity 31 against the bias of arms.

Particularly, the first ends 33A of the arms 32 will contact at first the first taper 45A. The direction of this first taper 45A is such that it will progressively push the arms 32 against their bias. In this sense, the arms 32 will initially resist insertion of the motor shaft 40 into the receiving cavity 31.

As the motor shaft 40 continues to be inserted into the receiving cavity 31, the first ends 33A of the arms 32 will contact the second taper 45B. This second taper 45B is in an opposite direction to the first taper 45B. As a result, further insertion of the motor shaft 40 into the receiving cavity 31 will allow the arms to move inwardly of the receiving cavity 31 under their bias. This will mean that the arms 32 act to bias the rotor 10 towards the proximal end 40A of the motor shaft 40.

The receiving pin 40 will then be fully received in the cavity and the rotor 10 will be in the engaged position as shown in Figure 4. In this position, the first ends 33A of the arms 33 may be axially aligned with the receiving portion 40C. In examples with a further taper of the base portion 40D, the bias of the arms 32 may act to keep the rotor 10 in this position relative to the motor shaft 40.

In this sense, the rotor 10 may be axially retained when it is in the engaged position. Axial movement of the rotor 10 would force the arms 32 outward of the receiving cavity 31 against their bias and is hence resisted.

In general, a method of attaching a rotor 10 to a centrifuge may be identified. This method comprises the steps of providing a centrifuge comprising a motor shaft 40 in the form of a shaped pin as described above in relation to Figures 4 and 5. The motor shaft 40 may comprise a shaped pin adaptor or the shaped pin may be the actual shape of the motor shaft 40. A rotor 10 as described above in relation to Figures 4 and 5 is then provided. The motor shaft 40 is then inserted into the receiving cavity 31 of the rotor 10. This insertion is continued, for example in the manner as described above in relation to Figures 4 and 5, such that each pivotable arm 32 engages the motor shaft 40 to axially retain the rotor 10.

With the rotor 10 attached to the centrifuge, operation of the centrifuge may be performed. One or more samples or sample tubes may be inserted in the sample cavities of the rotor 10. These are samples which are to be centrifuged.

The centrifuge is then operated. The motor shaft 40 rotates, causing rotation of the rotor 10. As the rotor 10 rotates, centrifugal force acts on the arms 32. With the arms 32 having their centre of mass between the pivot point 35 and the second end 33B, the second end 33B is forced outwardly of the receiving cavity 31 by this centrifugal force. This results in the first ends 33A being forced inwardly. This means that the arms 32 grip the motor shaft 40 with a greater force, thereby further axially retaining the rotor 10 in use.

As a result, the force applied to axially retain the rotor 10 increases when the centrifuge is used. This means that the rotor 10 will not detach in use.

The lower retaining force when the rotor 10 is stationary however means that the rotor 10 can be readily removed by a user by hand against the force of the arms 32. This means that the rotor 10 can be easily removed by hand without the need to use a special tool or releasing button or the like.

To remove the rotor 10, the rotor 10 is lifted such that the rotor 10 begins to move away from the motor shaft 40. This causes the arms 32 to ride up the second taper 45B. Once the arms 32 have passed the second taper 45B and reached the first taper 45A then the biasing force acting on the arms 32 will force the rotor 10 away from the motor shaft 40.

In this sense, the rotor 10 can be securely retained in use while still allowing for easy removal. For example, microliter centrifuges may generate an axial force of 30 N to 40 N on the rotor 10 in an upward direction, which must be resisted by the arms 32 in use. The centrifugal force acting on the arms 32 means that this axial force on the rotor 10 can be resisted to axially retain the rotor 10. Once the centrifuge has stopped operating, it may be desired that the force required to lift the rotor 10 is less than this amount. This may be achieved by the present example.

In general, a method of detaching the rotor 10 from a centrifuge is provided. The rotor 10 is as described above in relation to Figures 4 and 5. The centrifuge comprises the motor shaft 40 as discussed above in relation to Figures 4 and 5. The motor shaft 40 is received in the receiving cavity 31 such that each pivotable arm 32 is engaging the motor shaft 40 to axially retain the rotor 10. The method comprises the step of lifting the rotor 10 axially such that the second taper 45B engages and moves each pivotable arm 32 against its bias. This lifting is continued until the receiving cavity 31 is clear of the motor shaft 40.

In these examples, an improved locking system for a rotor of a centrifuge is provided.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean that the described feature includes the additional features that follow, and are not intended to (and do not) exclude the presence of other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

Moreover, although aspects and embodiments have primarily been described with reference to physical apparatus, the disclosure also provides methods of manufacturing and using such apparatus. For example, methods of manufacturing any of the apparatus described herein are provided, as are methods of using the apparatus described herein.

### CLAUSES

1. A rotor for a centrifuge, the rotor comprising:
   one or more sample cavities for receiving samples;
   a receiving cavity for receiving a motor shaft of a centrifuge in an engaged position; and
   a pivotable arm biased into the receiving cavity for engaging the motor shaft in the receiving cavity to axially retain the rotor in the engaged position.
2. The rotor of clause 1, comprising a plurality of pivotable arms, each biased to extend into the receiving cavity for engaging the motor shaft in the receiving cavity to axially retain the rotor.
3. The rotor of clause 2, wherein the plurality of pivotable arms are arranged with rotational symmetry around the receiving cavity.
4. The rotor of any preceding clause, wherein each pivotable arm comprises:
   a first end biased into the receiving cavity for engaging the motor shaft in the receiving cavity to axially retain the rotor;
   a second end opposite the first end; and
   a pivot point between the first end and the second end,
   wherein each pivotable arm is pivotally attached to the rotor at the pivot point, and a centre of mass of each pivotable arm is between the pivot point and the second end.
5. The rotor of clause 4, wherein each pivotable arm comprises a counterweight portion at or near to the second end.
6. The rotor of any preceding clause, wherein each pivotable arm comprises a recess for receiving a portion of the motor shaft, preferably each recess is a depression for receiving an apex between a first taper and a second taper of the motor shaft.
7. The rotor of any preceding clause, further comprising a torque transfer mechanism for transferring rotation of the motor shaft to a rotor in the engaged position,
   preferably the rotor comprises one or more protrusions for engaging corresponding cavities on the motor shaft, or vice-versa.
8. The rotor of any preceding clause, wherein the rotor comprises a rotor body comprising the one or more sample cavities, and a rotor adaptor comprising the receiving cavity and each pivotable arm,
   preferably the rotor adaptor is releasably attached to the rotor body.
9. The rotor of any preceding clause, wherein the receiving cavity is arranged in a centre of the rotor.
10. A centrifuge comprising:
   a motor shaft for transmitting rotational movement to a rotor, wherein the motor shaft comprises a head at a distal end of the motor shaft, the head having in order from the distal end in a first direction: a first taper towards the distal end; and a second taper towards a proximal end of the motor shaft.
11. The centrifuge of clause 10, wherein the motor shaft further comprises, in order from the second taper in the first direction: a receiving portion; and a base portion, wherein the receiving portion is narrower than the base portion and the head.
12. The centrifuge of clause 11, wherein the base portion comprises a taper towards the distal end of the motor shaft.
13. The centrifuge of any of clauses 10 to 12, wherein the first taper is shallower than the second taper.
14. The centrifuge of any of clauses 10 to 13, wherein the motor shaft is rotationally symmetric.
15. The centrifuge of any of clauses 10 to 14, wherein the motor shaft is circular in cross-section.
16. The centrifuge of any of clauses 10 to 14, wherein the motor shaft is polygonal in cross-section, preferably for transmitting torque from the motor shaft to a rotor.
17. The centrifuge of any of clauses 10 to 16, further comprising the rotor of any of clauses 1 to 9.
18. A method of attaching a rotor to a centrifuge, the method comprising the steps of:
   providing the centrifuge according to any of clauses 10 to 17;
   providing the rotor according to any of clauses 1 to 9;
   inserting the motor shaft into the receiving cavity such that each pivotable arm engages the motor shaft to axially retain the rotor.
19. A method of detaching the rotor according to any of clauses 1 to 9 from the centrifuge according to any of clauses 10 to 17, wherein the motor shaft is received in the engagement cavity such that each pivotable arm is engaging the motor shaft to axially retain the rotor, the method comprising the steps of:
   lifting the rotor axially such that the second taper engages and moves each pivotable arm against its bias.

## Claims

1. A rotor for a centrifuge, the rotor comprising:
one or more sample cavities for receiving samples;
an engagement pin, the engagement pin comprising a head at a distal end of the engagement pin, the head having in order from the distal end in a first direction: a first taper towards the distal end; and a second taper towards a proximal end of the engagement pin.

2. The rotor of claim 1, wherein the rotor comprises a rotor body comprising the one or more sample cavities, and a rotor adaptor comprising the engagement pin,
preferably the rotor adaptor is releasably attached to the rotor body.

3. The rotor of any preceding claim, wherein the engagement pin is arranged in a centre of the rotor.

4. The rotor of any preceding claim, wherein the engagement pin further comprises, in order from the second taper in the first direction: a receiving portion; and a base portion, wherein the receiving portion is narrower than the base portion and the head,
preferably the base portion comprises a taper towards the distal end of the engagement pin.

5. The rotor of any preceding claim, wherein the first taper is shallower than the second taper.

6. The rotor of any preceding claim, wherein the engagement pin is rotationally symmetric.

7. The rotor of any preceding claim, wherein the engagement pin is:
circular in cross-section; or
polygonal in cross-section, preferably for transmitting torque from a motor shaft of a centrifuge to the rotor.

8. A rotor attachment mechanism for engaging the rotor of any preceding claim with a motor shaft of a centrifuge, the rotor attachment mechanism comprising:
a receiving cavity for receiving the engagement pin of the rotor in an engaged position; and
a pivotable arm biased to extend into the receiving cavity for engaging the engagement pin in the receiving cavity to axially retain the rotor in the engaged position.

9. The rotor attachment mechanism of claim 8, comprising a plurality of pivotable arms, each biased to extend into the receiving cavity for engaging the engagement pin in the receiving cavity to axially retain the rotor,
preferably the plurality of pivotable arms are arranged with rotational symmetry around the receiving cavity.

10. The rotor attachment mechanism of claims 8 or 9, wherein each pivotable arm comprises:
a first end biased into the receiving cavity for engaging the engagement pin in the receiving cavity to axially retain the rotor;
a second end opposite the first end; and
a pivot point between the first end and the second end,
wherein each pivotable arm is pivotally attached to the rotor attachment mechanism at the pivot point, and a centre of mass of each pivotable arm is between the pivot point and the second end,
preferably each pivotable arm comprises a counterweight portion at or near to the second end.

11. The rotor attachment mechanism of any of claims 8 to 10, wherein each pivotable arm comprises a recess for receiving a portion of the engagement pin, preferably each recess is a depression for receiving an apex between a first taper and a second taper of the engagement pin.

12. The rotor attachment mechanism of any of claims 8 to 11, further comprising a torque transfer mechanism for transferring rotation of the motor shaft to a rotor in the engaged position,
preferably the torque transfer mechanism comprises one or more protrusions for engaging corresponding cavities on the rotor, or vice-versa.

13. A centrifuge comprising:
a motor shaft;
the rotor attachment mechanism of any of claims 8 to 12; and
the rotor of any of claims 1 to 7.

14. A method of attaching a rotor to a centrifuge, the method comprising the steps of:
providing a centrifuge comprising a motor shaft and the rotor attachment mechanism of any of claims 8 to 12;
providing a rotor according to any of claims 1 to 7;
inserting the engagement pin into the receiving cavity such that each pivotable arm engages the engagement pin to axially retain the rotor.

15. A method of detaching the rotor according to any of claims 1 to 7 from a centrifuge comprising a motor shaft and the rotor attachment mechanism of any of claims 8 to 12, wherein the engagement pin is received in the receiving cavity such that each pivotable arm is engaging the engagement pin to axially retain the rotor, the method comprising the steps of:
lifting the rotor axially such that the second taper engages and moves each pivotable arm against its bias.
